(19) Europäisches Patentamt
European Patent Office
Office européen des brevets

(11) Numéro de publication: **0 241 650**
**A1**

(12) # DEMANDE DE BREVET EUROPEEN

(21) Numéro de dépôt: **87101346.2**

(22) Date de dépôt: **16.05.84**

(51) Int. Cl.⁴: **H 01 M 4/58**, H 01 M 6/16

(30) Priorité: **19.05.83 FR 8308266**
**13.04.84 FR 8406365**

(43) Date de publication de la demande: **21.10.87**
**Bulletin 87/43**

(84) Etats contractants désignés: **AT BE CH DE GB IT LI LU NL SE**

(60) Numéro de publication de la demande initiale en application de l'article 76 CBE: **0126701**


(71) Demandeur: **LE CARBONE LORRAINE, Tour Manhattan - La Défense 2, 5-6, place de l'Iris,, F-92400 Courbevoie (FR)**

(72) Inventeur: **Touzain, Philippe, 89, chemin des Jacobins, F-38830 St. Ismier (FR)**
Inventeur: **Yazami, Rachid, 28, route de Savoir, F-38420 Domene (FR)**
Inventeur: **Maire, Jacques, 10, rue du Jourdain, F-75020 Paris (FR)**

(74) Mandataire: **Pascaud, Claude et al, PECHINEY 28, rue de Bonnel, F-69433 Lyon Cedex 3 (FR)**


(54) **Composés d'insertion du graphite à performances améliorées et application électrochimique de ces composés.**


(57) L'invention concerne une électrode de générateur électrochimique, caractérisée en ce que, dans sa composition, entre de l'oxyde graphitique obtenu par deux oxydations successives d'un graphite ayant une granulométrie de l'ordre du micromètre. De préférence, le graphite soumis à la double oxydation a une surface spécifique au moins égale à 100 $mg^2.g^{-1}$.

L'oxyde graphitique peut être mélangé à un composé d'insertion du graphite avec un chlorure de métal de transition tel que le composé $C_7MnCl_2$.

Application aux générateurs électrochimiques et notamment aux piles au lithium dont la cathode contient ce type d'oxyde graphitique.


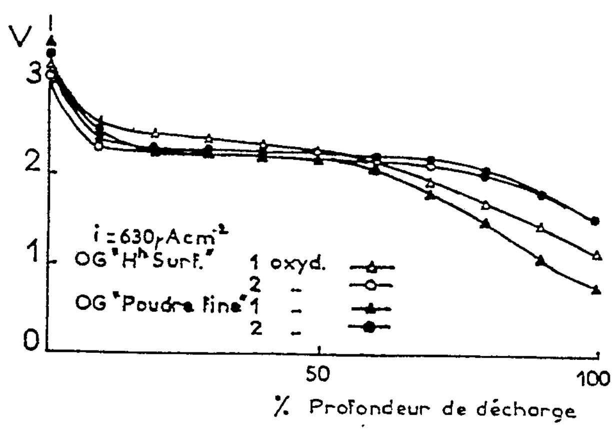


EP 0 241 650 A1

# COMPOSES D'INSERTION DU GRAPHITE A PERFORMANCES AMELIOREES ET APPLICATION ELECTROCHIMIQUE DE CES COMPOSES

La présente invention est relative à des composés d'insertion à performances améliorées et à leurs applications électrochimiques, notamment comme constituants d'électrodes de générateurs électrochimiques et en particulier de piles à haute densité d'énergie utilisant dans leur chaîne électrochimique des métaux alcalins comme le lithium.

Les recherches entreprises ces dernières années sur les piles à haute densité d'énergie utilisant du lithium à l'anode ont souvent été orientées vers la mise au point de nouveaux matériaux de cathode. Les conditions exigées pour de tels matériaux (faible masse équivalente, haut potentiel par rapport à l'anode, bonne conductivité mixte électronique et ionique, insolubilité dans l'électrolyte, etc...) sont difficiles à réunir et des limitations d'utilisation apparaissent vite.

Les composés d'insertion du graphite ont été largement étudiés en vue de leurs applications électrochimiques : fluorure graphitique CF, oxyde graphitique, composés d'insertion avec les halogénures métalliques, etc...

Ainsi, dans le domaine de la haute énergie, avec des piles à anode au lithium, des résultats intéressants ont été obtenus avec une cathode contenant du fluorure graphitique.

Des résultats encourageants ont également été obtenus avec une cathode contenant de l'oxyde graphitique. Toutefois, leur tension en cours d'utilisation s'abaisse assez rapidement et leur rendement énergétique reste médiocre.

Le but principal de l'invention est de pallier ces inconvénients en améliorant les performances des composés d'insertion du graphite utilisables dans les applications électrochimiques.

Ce but est atteint selon l'invention qui consiste en des composés d'insertion du graphite caractérisés en ce qu'ils sont obtenus par deux oxydations successives d'une poudre de graphite ayant une granulométrie de l'ordre du micromètre. La surface spécifique du graphite

peut être quelconque, mais elle peut être aussi, et avec des résultats améliorés, supérieure à 100 $m2.g^{-1}$.

Ce graphite "haute surface" peut par exemple être obtenu par broyage sous vide de graphite naturel dans un broyeur vibrant (Thèse M.J.Kent, Ph.D. Thesis, City University London 1973).

On constate, en effet, qu'en réalisant des composés d'insertion de graphite par les méthodes propres à chaque type de composé, mais en utilisant une telle poudre de graphite, on améliore nettement leurs performances dans le domaine électrochimique.

Le choix du composé d'insertion selon l'invention dépend de l'application envisagée.

Ainsi, comme constituants de cathodes de piles au lithium, ce composé peut être avantageusement l'oxyde graphitique.

Lorsque le constituant choisi est l'oxyde graphitique, celui-ci peut être mélangé à du graphite ou à un composé d'insertion du graphite avec un chlorure de métal de transition tel que Fe, Ni, Co, Cu, Mn.

L'exemple 1 suivant est donné à fins de comparaison. Il illustre l'obtention d'un oxyde graphitique par oxydation unique d'un graphite ayant une surface spécifique d'au moins 100 m2/g et une granulométrie au plus égale à 4 µm, et les performances réalisées lorsqu'il est utilisé comme constituant de cathode de pile au lithium.

Exemple 1 : OXYDE GRAPHITIQUE à partir de graphite "haute surface" (1 oxydation)

La méthode de préparation utilisée est la méthode de Brodie : 1 g de graphite est traité par 10 ml de $HNO_3$ concentré avec 2 g de $KClO_3$. A 60° C, sous atmosphère d'azote sec, le mélange maintenu en continuelle agitation donne en deux heures :

$$8\ C + KClO_3 + H_2O \xrightarrow{(HNO_3)} 2.C_4OOH + KCl$$

L'oxyde graphitique obtenu est lavé plusieurs fois avec de l'eau distillée puis centrifugé jusqu'à disparition des ions $NO_3^-$, $Cl^-$, $ClO_3^-$ $H^+$ et $K^+$ dans les eaux de rinçage. Le graphite ainsi obtenu est ensuite séché sous vide à température ordinaire pendant 24 heures.

On réalise alors à partir de l'oxyde graphitique obtenu, des électrodes en le mélangeant avec une poudre de graphite de Ceylan, puis en comprimant le mélange. Le pourcentage en poids de graphite est variable. Il peut aller de 50 % environ (laboratoire) à 10 % (industrie).

Ces électrodes ainsi réalisées sont montées comme cathodes dans des piles dont l'anode est en lithium et l'électrolyse une solution de 1M de $LiClO_4$ dans du carbonate de propylène, de manière à constituer plusieurs piles identiques.

On applique à chaque pile ainsi réalisée, une décharge intentiostatique différente, c'est-à-dire que l'on impose une densité de courant constante et différente pour chaque pile et on mesure la tension de la pile en fonction du pourcentage d'utilisation d'oxyde graphitique, c'est-à-dire du rendement faradique Ri. Le rendement faradique maximum pratique pour une pile donnée correspond à l'énergie débitée par la plus faible valeur de tension e participant à la définition du $< e >$

La valeur de la densité d'énergie D en Wh/kg est donnée par la relation :

$$D = \frac{Q < e > i}{m \times 3600}$$

avec Q = quantité totale d'électricité disponible dans la pile (en coulombs)

$< e >_i$ = valeur moyenne de la tension de palier (en volts), pour une densité de courant donnée, i

m = masse de la fraction électroactive de la cathode et de l'anode (en kg)

La réaction bilan de la pile, en prenant comme formule de l'oxyde graphitique $C_4OOH$ est :

$$3\ Li + C_4OOH \longrightarrow 4\ C + Li_2O + LiOH$$

en conséquence : $Q = 96500 \times 3$ (en coulombs)

$$m = M_{C_4OOH} + 3\ M_{Li} \text{ (en kg)}$$

La densité d'énergie théorique Dth de la pile est la valeur de D pour i = 0.

Le rendement énergétique de la pile $R_E$ est :

$$R_E = \frac{\langle e \rangle\ i}{\langle e \rangle\ 0}\ Ri$$

La densité d'énergie pratique Dpr est donnée par la relation :

$$Dpr = Dth \times R_E$$

Le tableau I rassemble les résultats.

TABLEAU I

| i ($\mu A/cm^2$) | <e>i (V) | Dth (Wh/kg) | Ri % | $R_E$ % | Dpr (Wh/kg) |
|---|---|---|---|---|---|
| 0 | 3 | 2365 | = | - | - |
| 25 | 2,7 | - | 95 | 85 | 2020 |
| 100 | 2,5 | - | 90 | 75 | 1770 |
| 630 | 2,35 | - | 85 | 67 | 1580 |

Si l'on compare ces résultats à ceux obtenus dans des piles au lithium identiques à la différence près que la cathode est constituée de graphite et d'un oxyde graphitique provenant d'un graphite quelconque, on constate que :

- la courbe de tension f (Ri) présente un palier plat pour le Graphite Haute surface et pas pour les autres,
- la valeur du palier est notablement supérieure aux tensions correspondantes à même Ri des autres piles à oxyde graphitique de graphite naturel non broyé sous vide
- le rendement énergétique de 75 à 85 % est 1,2 à 3 fois plus élevé qu'avec ces autres piles.

Par ailleurs, on peut établir des comparaisons avec d'autres piles dont les caractéristiques sont rassemblées dans le tableau 2 suivant :

TABLEAU 2

| Type de piles | Masse équivalente | | f.e.m. initiale | densité d'énergie théorique |
|---|---|---|---|---|
| | Cathode seule | Cathode + anode | V | Wh/kg |
| $Li/C_4OOH$ selon l'invention | 27 | 34 | 3 | 2365 |
| Li/(CF) | 31 | 38 | 3 | 2116 |
| Zn Mn $O_2$ (Leclanché) | 87 | 120 | 1,5 | 335 |

On voit nettement se détacher la pile $Li/C_4OOH$ tant au point de vue masse équivalente que densité d'énergie. De plus, si on la compare à la pile Li/CF, dont les performances sont les plus proches, la pile $Li/C_4OOH$ est moins chère : l'oxyde graphitique revient moins cher que le fluorure graphitique.

Selon la présente demande, on peut soit encore améliorer les performances de l'oxyde graphitique lorsqu'il est obtenu à partir de graphite "haute surface", soit obtenir des performances voisines en partant alors d'un graphite de surface spécifique quelconque et de granulométrie de l'ordre du µm (graphite que l'on appellera "poudre fine"), ces bonnes performances provenant de l'obtention des oxydes graphitiques par deux oxydations successives de ces graphites.

L'avantage de cette double oxydation permet d'obtenir un oxyde graphitique dont le rapport O/C est plus important et, par la même, un oxyde graphitique plus performant.

Dans les deux cas, lorsque l'on fait une double oxydation, les plans du graphite sont bien écartés par la première, et l'apport d'agents oxydants neufs lors de la seconde permet de porter l'oxydation du graphite

à un niveau plus élevé et donc d'augmenter le taux d'oxydation O/C de ce dernier.

La méthode d'oxydation choisie peut être celle de Brodie telle que décrite dans l'exemple 1. Elle peut être remplacée par toute autre méthode et en particulier par celle de Staudenmaier qui consiste à oxyder lentement le graphite par un mélange de chlorate de potassium ou de sodium, d'acide sulfurique concentré et d'acide nitrique fumant, en maintenant le mélange à température ambiante. Cette méthode évite la disparition des grains les plus fins.

L'exemple 2 montre, à titre indicatif et non limitatif, les avantages de la présente demande.

Exemple 2

On prépare de l'oxyde graphitique par la méthode de Brodie décrite dans l'exemple 1, respectivement à partir :

- de graphite "haute surface"
- de graphite "poudre fine", de granulométrie comprise entre quelques dixièmes et quelques µm,

d'une part, en ne leur faisant subir qu'une oxydation comme dans l'exemple 1 et d'autre part, en leur faisant subir deux oxydations successives.

A partir des différents oxydes graphitiques obtenus, on réalise alors des électrodes de manière identique à celle décrite dans l'exemple 1, et on monte les électrodes obtenues comme cathodes dans des piles dont l'anode est en lithium et l'électrolyte une solution 1M de $LiClO_4$ dans du carbonate de propylène.

Les différentes piles ainsi constituées sont alors soumises à des décharges intentiostatiques.

Le tableau 3 rassemble les résultats comparatifs des piles selon l'oxyde graphitique utilisé.

TABLEAU 3

| Origine graphite | i ($\mu A/cm^2$) | <e>i V | Dth (Wh/kg) | Ri % | $R_E$ % | Dpr (Wh/kg) |
|---|---|---|---|---|---|---|
| | 0 | 3 | 2365 | - | - | - |
| Haute surface 1 oxydation | 630 | 2,35 | - | 85 | 67 | 1580 |
| Haute surface 2 oxydations | 630 | 2,25 | - | 100 | 75 | 1770 |
| Poudre fine 1 oxydation | 630 | 2,3 | - | 80 | 60 | 1420 |
| Poudre fine 2 oxydations | 630 | 2,3 | - | 100 | 77 | 1800 |

Les figures 1 et 2 montrent les courbes de décharge :

- d'une part, avec des électrodes comportant de l'oxyde graphitique obtenu soit à partir de graphite "haute surface" (O.G. Haute surface), soit à partir de graphite "poudre fine" (O.G. Poudre fine), n'ayant subi qu'une oxydation, pour différentes densités de courant (fig. 1)
- d'autre part, avec des électrodes comportant de l'oxyde graphitique obtenu soit à partir de graphite "haute surface", soit à partir de graphite "poudre fine", ayant subi une ou deux oxydations, pour une même valeur de densité de courant (fig. 2).

Le tableau et les figures montrent que :

- l'oxyde graphitique provenant d'un graphite "haute surface" conduit à de meilleures caractéristiques électrochimiques que l'oxyde graphitique provenant d'un graphite "poudre fine" dans le cas de l'oxydation unique,
- l'oxyde graphitique provenant d'un graphite "poudre fine" doublement oxydé conduit à des résultats voisins de ceux obtenus avec un oxyde graphitique provenant d'un graphite "haute surface".

<u>Exemple 3</u>

Cet exemple est une variante de l'exemple 2.

La différence est que, lors de la réalisation d'électrodes, le graphite mélangé à l'oxyde graphitique est remplacé par le composé d'insertion de graphite avec $MnCl_2$ : $C_7MnCl_2$ en proportion équimassique.

La pile ainsi constituée présente l'avantage de pouvoir fournir de grandes valeurs de densité de courant pendant des temps courts.

REVENDICATIONS

1. Electrode de générateur électrochimique, caractérisée en ce que, dans sa composition, entre de l'oxyde graphitique obtenu par deux oxydations successives d'un graphite ayant une granulométrie de l'ordre du micromètre.

2. Electrode de générateur électrochimique, selon revendication 1, caractérisée en ce que le graphite soumis à la double oxydation a une surface spécifique au moins égale à 100 $m^2.g^{-1}$

3. Electrode de générateur électrochimique selon revendication 1 ou 2, caractérisée en ce que l'oxyde graphitique est mélangé à du graphite.

4. Electrode de générateur électrochimique selon revendication 1 ou 2, caractérisée en ce que l'oxyde graphitique est mélangé à un composé d'insertion du graphite avec un chlorure de métal de transition.

5. Electrode de générateur électrochimique selon la revendication 4, caractérisée en ce que le composé d'insertion du graphite avec un chlorure de métal de transition est le composé $C_7MnCl_2$.

6. Générateur électrochimique, caractérisé en ce qu'il comporte au moins une électrode telle que revendiquée dans l'une quelconque des revendications 1 à 5.

7. Générateur électrochimique, selon la revendication 6, caractérisé en ce que sa chaîne électrochimique étant du type :

Li/solution 1M de $LiClO_4$ dans du carbonate de propylène/oxyde graphitique mélangé à du graphite,

- sa tension de palier lors d'une décharge intentiostatique avec une densité de courant de 630µA/$cm^2$ est de l'ordre de 2,3 V
- sa densité d'énergie théorique est de 2365 Wh/kg
- son rendement faradique est de 100 %
- son rendement énergétique est ≥ 75 %

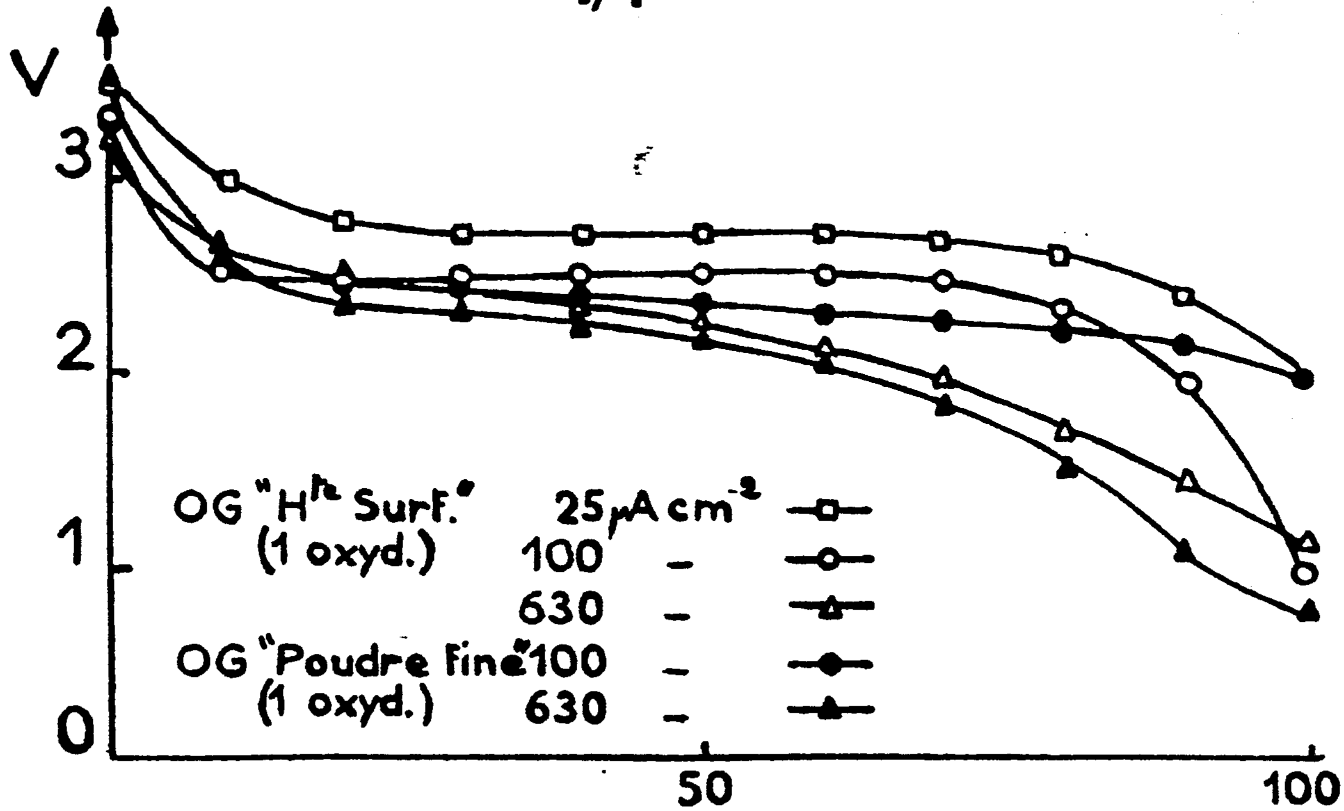
V
3
2
1
0
OG "H^te Surf." (1 oxyd.) 25 µA cm⁻² 
100 -
630 -
OG "Poudre fine" (1 oxyd.) 100 -
630 -
50
100
% Profondeur de décharge

fig. 1

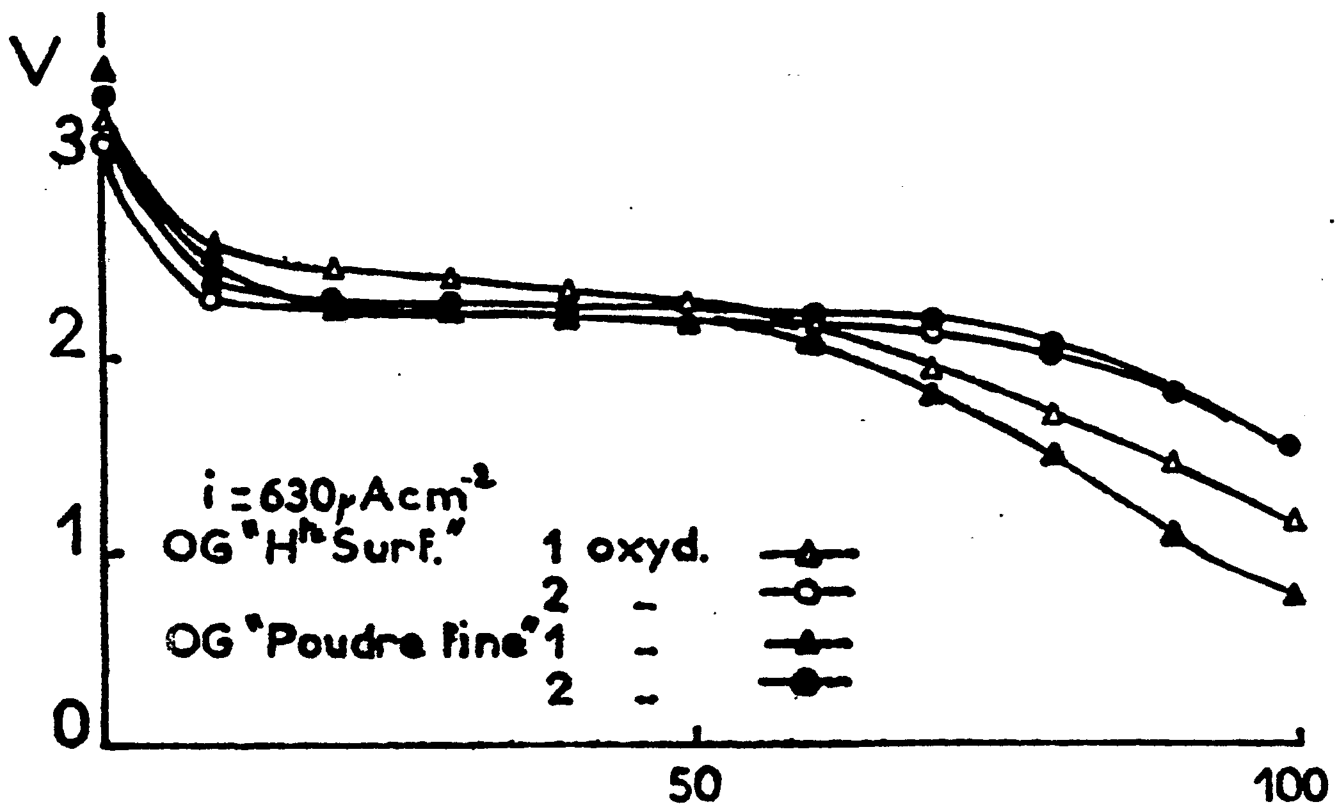
V
3
2
1
0
i = 630 µA cm⁻²
OG "H^te Surf." 1 oxyd.
2 -
OG "Poudre fine" 1 -
2 -
50
100
% Profondeur de décharge

fig. 2

Office européen des brevets

**RAPPORT DE RECHERCHE EUROPEENNE**

0241650

Numéro de la demande

EP 87 10 1346

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | FR-A- 943 870 (H.F.J. JEDLICKA)<br>* Résumé, points I,II; page 1, ligne 27 - page 2, ligne 2 *<br>--- | 1,3,6 | H 01 M 4/58<br>H 01 M 6/16 |
| Y | FR-A- 618 655 (C.F. BURGESS LABORATORIES)<br>* Page 2, lignes 14-66; page 3, lignes 90-102; page 5, lignes 93-101; page 6, lignes 55-67 *<br>--- | 1,3,6 | |
| Y | JOURNAL ELECTROANAL. CHEM., vol. 72, 1976, pages 1-31; G. EICHINGER et al.: "High energy density lithium cells. Part II. Cathodes and complete cells"<br>* Page 18, lignes 12-18 *<br>--- | 1,3,6 | |
| | | | DOMAINES TECHNIQUES RECHERCHES (Int. Cl.4) |
| Y | US-A-1 639 983 (B.R. BROWN)<br>* Revendication 2; page 1, lignes 13-34; page 2, lignes 56-61,91-93 *<br>--- -/- | 1,3,6 | H 01 M |

Le présent rapport de recherche a été établi pour toutes les revendications

| Lieu de la recherche | Date d'achèvement de la recherche | Examinateur |
|---|---|---|
| LA HAYE | 31-07-1987 | D'HONDT J.W. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire
T : théorie ou principe à la base de l'invention
E : document de brevet antérieur, mais publié à la date de dépôt ou après cette date
D : cité dans la demande
L : cité pour d'autres raisons
& : membre de la même famille, document correspondant

OEB Form 1503 03 82

Office européen des brevets

# RAPPORT DE RECHERCHE EUROPEENNE

Numéro de la demande

EP 87 10 1346



## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | JOURNAL OF THE ELECTROCHEMICAL SOCIETY, vol. 120, no. 9, septembre 1973, pages 1161-1168; H.F. HUNGER et al.: "Cathodic discharge of graphite intercalation compounds in organic electrolytes" * Résumé page 1161; page 1162, colonne de droite, lignes 51-33; page 1163, colonne de gauche, lignes 3-8, tableau III * | 1,3,6 | |
| | --- | | |
| A | ZEITSCHRIFT FÜR ANORGANISCHE UND ALLGEMEINE CHEMIE, vol. 291, nos 5-6, octobre 1957, pages 205-344; A. CLAUSS et al.: "Untersuchungen zur Struktur des Graphitoxyds" * Page 206, lignes 11-14; page 207, tableau I * | 1,3,6 | |
| | --- | | DOMAINES TECHNIQUES RECHERCHES (Int. Cl.4) |
| A | MATERIALS SCIENCE AND ENGINEERING, vol. 31, 1977, pages 319-329, Elsevier Sequoia S.A., Lausanne, CH; M. ARMAND et al.: "Graphite intercalation compounds as cathode materials" * Page 323, tableau II, exemple 14 * | 5 | |
| | --- -/- | | |

Le présent rapport de recherche a été établi pour toutes les revendications

| Lieu de la recherche | Date d'achèvement de la recherche | Examinateur |
|---|---|---|
| LA HAYE | 31-07-1987 | D'HONDT J.W. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82

Office européen des brevets

# RAPPORT DE RECHERCHE EUROPEENNE

0241650

Numéro de la demande

EP 87 10 1346



## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | DE-A-2 139 714 (RHEINISCH-WESTFÄLISCHES ELEKTRIZITÄTSWERK AG) * Revendication 1; page 8, lignes 10-13 * | 1,6,7 | |
| | ----- | | |
| | | | DOMAINES TECHNIQUES RECHERCHES (Int. Cl.4) |

Le présent rapport de recherche a été établi pour toutes les revendications

| Lieu de la recherche | Date d'achèvement de la recherche | Examinateur |
|---|---|---|
| LA HAYE | 31-07-1987 | D'HONDT J.W. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82